# EUROPEAN PATENT SPECIFICATION

(11) **EP 0 674 477 B1**
(45) Date of publication and mention of the grant of the patent: **02.04.1997**
(21) Application number: 93919546.7
(22) Date of filing: 20.09.1993
(51) Int. Cl.: A01F 15/07

(54) **BALE WRAPPING APPARATUS**
BALLENWICKELVORRICHTUNG
APPAREIL D'EMBALLAGE DE BOTTES

(30) Priority: 18.09.1992 IE 922670; 27.11.1992 IE 922846
(43) Date of publication of application: 04.10.1995
(73) Proprietor: WELLMOUNT LIMITED, Kilmaine County Mayo (IE)
(72) Inventor: McHALE, Padraic, Christopher, County Mayo (IE); McHALE, Martin, County Mayo (IE)
(74) Representative: Gorman, Francis Fergus
(86) International application number: IE9300049
(87) International publication number: WO9406272

(56) References cited:
- EP-A- 0 206 889
- EP-A- 0 405 727
- WO-A-92/00003
- WO-A-92/20210

## Description

The present invention relates to bale wrapping apparatus, and in particular though not limited to bale wrapping apparatus of the type suitable for wrapping a round, square or rectangular bale of forage, typically, hay, straw, or the like.

Bale wrapping apparatus, in general, referred to as bale wrappers, are used extensively for wrapping round and square bales of hay, straw and other such fibrous forage in a sheet of flexible plastics material. Bale wrappers of this type are disclosed in European Patent Specification No. 0,208,034, European Patent Specification No. 0,367,529 and British Patent Specification No. 2,191,984. In general, such bale wrappers comprise a chassis supported on ground engaging wheels. A sheet feeding mechanism for feeding the sheet plastics material from a roll for wrapping the bale is supported on the chassis. A bale support table is mounted on the chassis and is rotatable about a vertical axis for rotating the bale about the vertical for wrapping the sheet material around the bale. Spaced apart horizontal rollers rotatably mounted on the table carry and drive support belts on which the bale is supported for rotating the bale around a horizontal axis simultaneously while the bale is being rotated about the vertical axis for wrapping the bale. The bale support table is operable from a lower substantially horizontal wrapping position to a raised tipped position for tipping the wrapped bale from the table to the ground. In general, the table is pivotal about a horizontal tipping axis which extends transversely of the bale wrapper adjacent the end thereof. An hydraulic tipping ram operates the table between the lower wrapping position and the raised tipped position, so that the bale is discharged rearwardly of the bale wrapper.

To avoid puncturing of the wrapping material of the wrapped bale, it is important that the wrapped bale should not fall directly onto stubble in a field, or other matter, or sharp objects which could cause puncturing of the wrapping material. Various attempts have been provided to avoid puncturing of a wrapped baler however, so far, such attempts have not been particularly successful. In one such attempt, a bale wrapper is provided with a bale mat which comprises a metal bale support plate for receiving the bale when discharged from the bale support table. The bale support plate is attached to the rear end of the chassis and extends rearwardly from the bale wrapper and rests on the ground. Accordingly, when the wrapped bale is discharged from the bale support table, it falls onto the bale support plate on the ground. While this bale support mat avoids the bale falling directly onto the stubble, nonetheless, the bale has to fall a considerable distance from the bale support table to the bale support plate, and under certain circumstances, puncturing or other damage to the bale wrapping may occur. A further problem with this bale wrapper is that, in general, it is necessary to disconnect the bale support plate if the bale wrapper is to be towed from one location to another.

A bale wrapper with an alternative arrangement for minimizing the risk of puncturing of the wrapping material of a wrapped bale comprises a bale support plate which is pivotally connected to the chassis adjacent the rear thereof about a horizontal pivot axis which extends parallel to the tipping axis of the bale support table. An hydraulic ram connected to the bale support plate and the chassis pivots the bale support plate from a raised receiving position for receiving a wrapped bale from the bale support table to a lower delivery position adjacent the ground for delivering the wrapped bale onto the ground, and vice versa. The bale support plate, while it does lower a wrapped bale from the bale support table to the ground at a controlled rate, it suffers from a particularly serious disadvantage. Because the bale support plate and the ram are connected to the chassis as the bale support plate pivots downwardly with the wrapped bale thereon the bale wrapper is seriously imbalanced. The weight of the wrapped bale on the bale support plate induces an imbalance turning moment in the chassis about the ground engaging wheels which can cause the bale wrapper to overbalance and in certain cases overturn. In many cases, where the bale wrapper is coupled to a tractor, the turning moment induced in the chassis of the bale wrapper could under certain circumstances cause overturning of the tractor to which the bale wrapper is coupled. This, it will be appreciated, is a serious disadvantage, and in many cases could lead to serious, and indeed, fatal accidents.

There is therefore a need for a bale wrapping apparatus which provides for a wrapped bale to be lowered to the ground without danger of puncturing of the wrapped bale, and without any danger of creating an imbalance in the bale wrapping apparatus.

The present invention is directed towards providing such a bale wrapping apparatus.

According to the invention, there is provided a bale wrapping apparatus comprising a chassis, a first ground engaging means for supporting the chassis on the ground, a bale support table for supporting the bale being wrapped, the bale support table being mounted on the chassis and being movable relative to the chassis from a wrapping position for supporting the bale during wrapping to a raised tipped position for discharging a wrapped bale therefrom, a bale support means mounted on the chassis and movable relative to the chassis between a receiving position spaced apart above the ground for receiving a wrapped bale from the bale support table and a delivery position adjacent the ground for permitting delivery of the wrapped bale to the ground, and a drive means for moving the bale support means from the delivery position to the receiving position, wherein a second ground engaging means is provided for engaging the ground at a location spaced apart from the first ground engaging means, and a coupling means couples the bale support means to the second ground engaging means so that the bale support means is at least partly supported by the second ground engaging means for stabilising the bale wrapping apparatus while the bale support means is supporting a wrapped bale, the coupling means permitting movement of the bale support means relative to the second ground engaging means.

The advantages of the invention are many. The main advantage of the invention is that it provides a bale wrapping apparatus from which a wrapped bale can be transferred from the bale support table to the ground by a bale support means without damage being done to the bale or the wrapping of the bale, and most importantly, without danger of the bale wrapping apparatus being overbalanced, or toppling over due to the weight of the wrapped bale on the support means. This important advantage of the invention is achieved by virtue of the fact that the bale support means is coupled to the second ground engaging means by a coupling means which also permits relative movement between the bale support means and the second ground engaging means.

In one embodiment of the invention, control means is provided for controlling the rate of movement of the bale support means as the bale support means moves towards the delivery position. The advantage of this feature of the invention is that it further ensures that the wrapped bale will be transferred to the ground without danger to the bale or the wrapping of the bale.

In another embodiment of the invention, the coupling means is a cushioning means connected between the bale support means and the second ground engaging means. This feature further minimizes the risk of damage to the bale or its wrapping.

Preferably, the coupling means comprises a coupling ram, the control means being associated with the coupling ram for controlling the rate of fluid flow associated with the coupling ram for cushioning the stroke of the coupling ram as the bale support means is moving from the receiving position to the delivery position. This feature of the invention provides a particularly advantageous arrangement of coupling means.

In one embodiment of the invention, the control means comprises a restrictor valve means associated with the coupling ram.

In another embodiment of the invention, the coupling ram is an hydraulic ram. Preferably, the coupling ram is a single acting hydraulic ram.

In one embodiment of the invention, the coupling means acts as the drive means for moving the bale support means from the delivery position to the receiving position. This provides a particularly advantageous, and cost effective, as well as efficient construction of apparatus.

Advantageously, an interlocking means is provided for interlocking the coupling means with the tipping means for moving the bale support table from the wrapping position to the tipped position, so that the coupling means moves the bale support means from the delivery position to the receiving position as the tipping means is moving the bale support table from the wrapping position to the tipped position.

Preferably, the interlocking means causes the coupling means to permit the bale support means to commence movement from the receiving position to the delivery position on the tipping means permitting the bale support table to commence movement from the tipped position to the wrapping position. Advantageously, the interlocking means comprises valve means for connecting the coupling means to the tipping means.

In one embodiment of the invention, the control means controls the rate of movement of the bale support means from the receiving position to the delivery position. This minimizes any risk of damage to the bale or its wrapping.

In another embodiment of the invention, the bale support means is pivotally mounted to the chassis about a first pivot axis and is pivotal about the first pivot axis between the receiving position and the delivery position. This provides a particularly advantageous construction of apparatus.

Preferably, the first pivot axis extends substantially parallel to a main pivot axis about which the bale support table is pivotal between the wrapping position and the tipped position. Advantageously, the bale support means extends transversely from the first pivot axis in a general direction away from the chassis. Preferably, the bale support means and the bale support table are pivotal towards each other as they are moving into the respective receiving and tipped positions.

In another embodiment of the invention, an urging means for urging a wrapped bale from the bale support means is provided. Preferably, the urging means comprises an urging member mounted on the second ground engaging means and co-operable with the bale support means for urging a bale from the bale support means when the bale support means is in the delivery position. Advantageously, the bale support means comprises an elongated carrier member, the carrier member being mounted to the chassis, and a bale support plate for carrying a wrapped bale being mounted on the carrier member. Preferably, the bale support plate is of a resilient material, and the urging means extends upwardly from the second ground engaging means for co-operating with the bale support plate when the bale support plate is in the delivery position for deforming the bale support plate for urging the wrapped bale from the bale support plate. Advantageously, the urging means is provided with a radiused abutment surface for abutting the bale support plate.

In one embodiment of the invention, the urging means is releasably mountable with the second ground engaging means. Preferably, the urging means is selectively mountable to the second ground engaging means in an operable orientation whereby the urging means co-operates with the support means, and a non-operable orientation whereby the urging means does not co-operate with the support means.

Alternatively, the bale support plate comprises a rigid plate member.

In one embodiment of the invention, the second ground engaging means is connected to the chassis by a connecting means. Preferably, the second ground engaging means extends from the connecting means in a general direction away from the chassis. Advantageously, the second ground engaging means extends away from the chassis in the same general direction as the bale support means.

In one embodiment of the invention, the connecting means connects the second ground engaging means to the chassis so that the second ground engaging means is movable relative to the chassis from a ground engaging position with the second ground engaging means engaging the ground to a raised position with the second ground engaging means spaced apart from the ground to accommodate trailing of the bale wrapping apparatus.

In another embodiment of the invention, the second ground engaging means is operably associated with the bale support table so that as the bale support table is moving into the wrapping position, the second ground engaging means is moved from the ground engaging position to the raised position. Preferably, a table engaging means extends from the second ground engaging means for engaging the bale support table as the bale support table is moving into the wrapping position for moving the second ground engaging means from the ground engaging position to the raised position.

In one embodiment of the invention, the connecting means pivotally connects the second ground engaging means to the chassis about a second pivot axis, so that the second ground engaging means is pivotal about the second pivot axis between the ground engaging position to the raised position. In another embodiment of the invention, the second ground engaging means extends transversely from the second pivot axis. Preferably, the second pivot axis extends substantially parallel to the main pivot axis. Advantageously, the first and second pivot axes co-incide with each other.

In one embodiment of the invention, the second ground engaging means comprises an elongated member extending from the connecting means to a ground engaging member spaced apart from the connecting means. Preferably, the coupling means is connected to the elongated member of the second ground engaging means at a location intermediate the connecting means and the ground engaging member. Advantageously, the coupling means is connected to the elongated member of the second ground engaging means at a location nearer to the connecting means than to the ground engaging member.

The invention will be more clearly understood from the following description of a preferred embodiment thereof, given by way of example only, with reference to the accompanying drawing, in which:
Fig. 1 is a perspective view of bale wrapping apparatus according to the invention,
Fig. 2 is a perspective view of the bale wrapping apparatus of Fig. 1 in a different position,
Fig. 3 is a sectional side elevational view of portion of the bale wrapping apparatus of Fig. 1,
Fig. 4 is a view similar to Fig. 3 of the bale wrapping apparatus in a different position,
Fig. 5 is a view similar to Fig. 3 of the bale wrapping apparatus in a still further different position,
Fig. 6 is a view similar to Fig. 3 of the bale wrapping apparatus in use,
Fig. 7 is a view similar to Fig. 4 illustrating the bale wrapping apparatus in use,
Fig. 8 is a plan view of portion of the bale wrapping apparatus of Fig. 1,

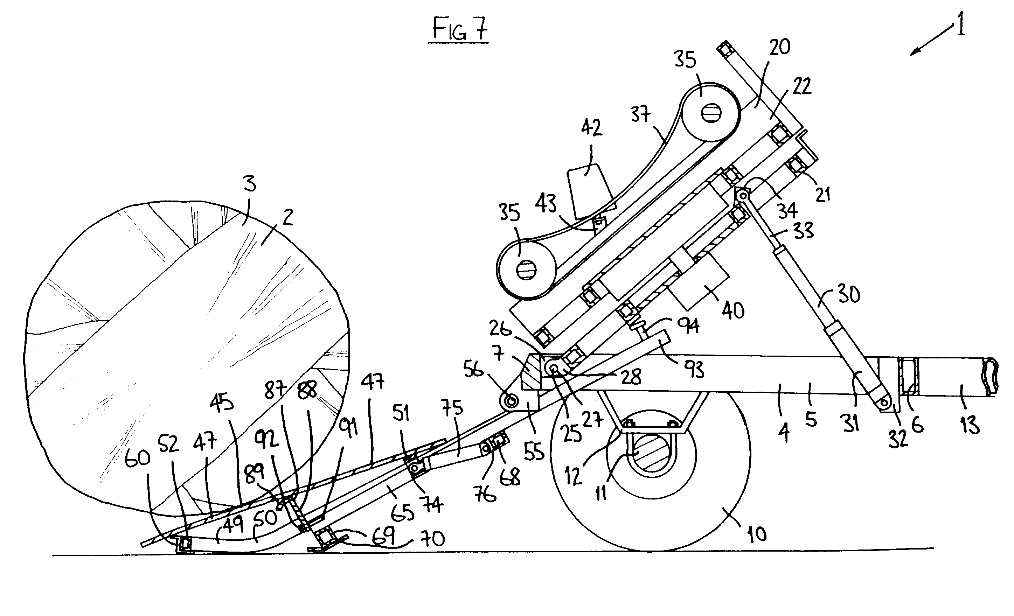

Fig. 9 is an end elevational view of portion of the apparatus of Fig. 1,
Fig. 10 is a perspective view of portion of the apparatus of Fig. 1,
Fig. 11 is a perspective view of the portion of the apparatus of Fig. 10 in a different position, and
Fig. 12 is a hydraulic circuit diagram of the apparatus of Fig. 1.

Referring to the drawings, there is illustrated a bale wrapping apparatus according to the invention indicated generally by the reference numeral 1 for wrapping a round bale 2 of hay, straw or the like with a sheet 3 of flexible plastics material. The bale wrapping apparatus comprises a chassis 4 having a pair of side members 5 joined by front and rear end members 6 and 7, respectively. The chassis 4 is supported on first ground engaging means, namely, a pair of ground engaging wheels 10 which are rotatable on an axle 11 which is carried on brackets 12 which in turn extend downwardly from the side members 5. A tow hitch 14 is carried on a pair of front members 13 extending forwardly from the front end member 6 for hitching the apparatus 1 to a tractor (not shown) or other power source. An upstanding post 15 extending upwardly from the chassis 4 carries a feeding mechanism indicated generally by the reference numeral 16 for carrying a roll (not shown) of the plastic sheet material (also not shown) and for feeding the sheet material from the roll to the bale 2.

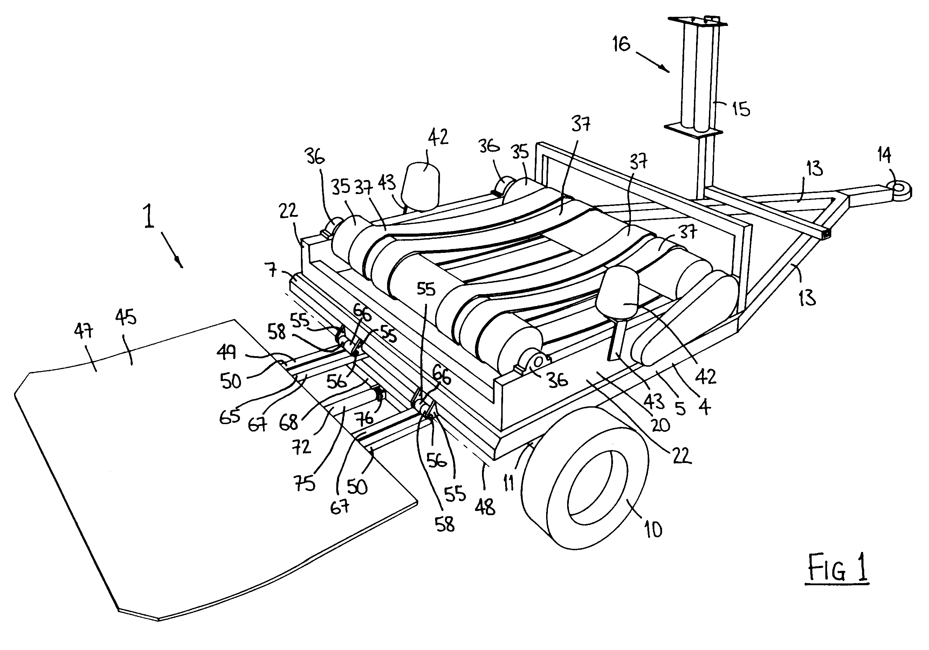

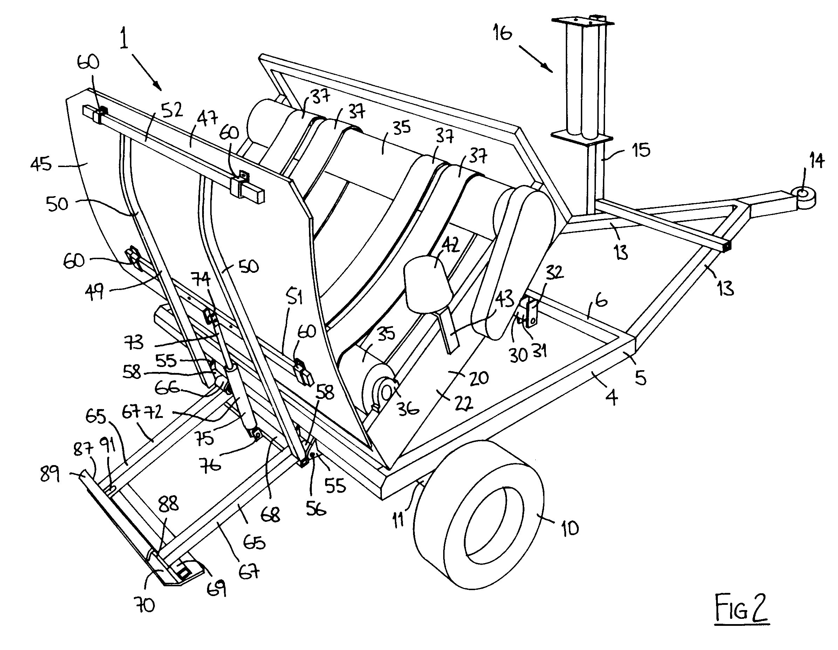

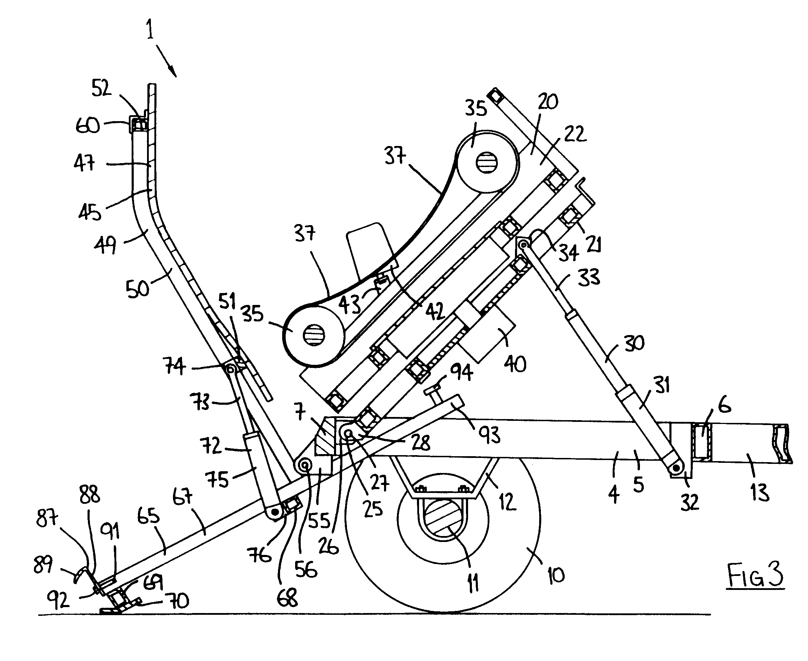

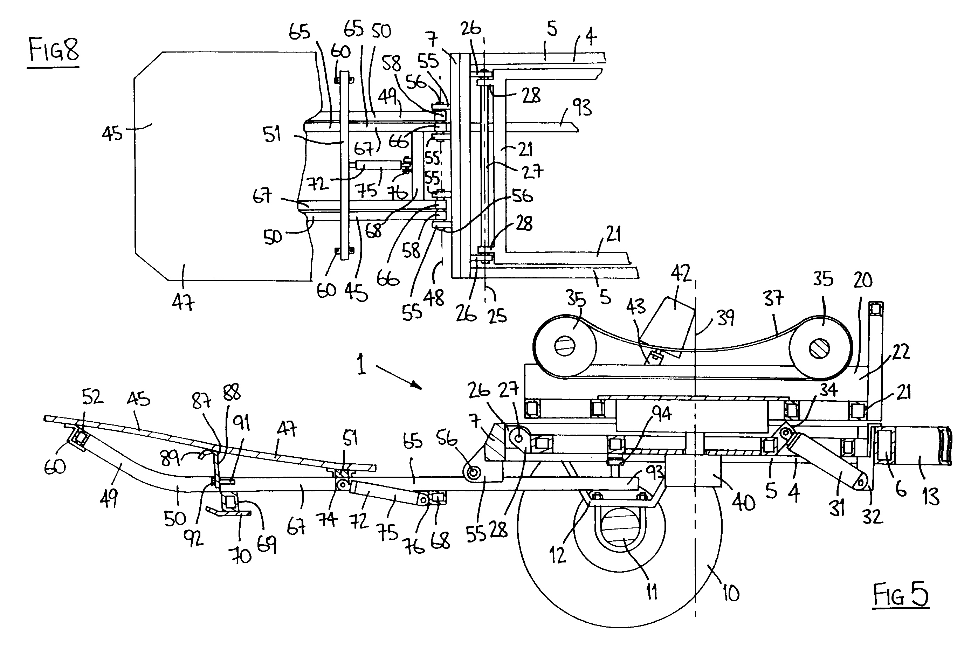

A bale support table 20 on which a bale 2 is supported during wrapping comprises a subframework 21 and a bale support framework 22. The subframework 21 is pivotally connected to the chassis 4 about a main pivot axis 25 for pivoting the bale support table 20 about a main pivot axis 25 with the bale support table 20 in a substantially horizontal wrapping position illustrated in Figs. 1 and 5 in which the bale is supported during wrapping to a raised tipped position illustrated in Figs. 2, 3 and 6 for discharging a wrapped bale 2 from the bale support table 20. Mounting brackets 26 extending from the rear end member 7 of the chassis 4 carry a main pivot shaft 27 which defines the main axis 25, see Fig. 8. Pivot brackets 28 extending from the subframework 21 pivotally engage the main pivot shaft 27 for pivotally connecting the subframework 21 to the chassis 4. The main axis 25 extends transversely of the chassis 4 adjacent the rear end thereof and extends substantially horizontally. A tipping means for pivoting the bale support table 20 between the wrapping position and the tipped position comprises a single acting hydraulic tipping ram 30, the housing 31 of which is pivotally connected by a pivot bracket 32 to the front end member 6 of the chassis 4, and a piston rod 33 is pivotally connected by a pivot bracket 34 to the subframework 21.

A pair of spaced apart drums 35 are rotatable carried in bearings 36 mounted on the bale support framework 22. Drive belts 37 carried on the drum 35 support the bale being wrapped on the bale support table 20. The bale support framework 22 is rotatably mounted to the subframework 21 and is rotatable about a central vertical axis 39 for rotating the bale also about the central vertical axis 39 for wrapping the sheet material 3 onto the bale 2. An hydraulic drive motor 40 mounted on the subframework 21 rotates the subframework 21 about the vertical axis 39 through a gearbox (not shown). Drive transmission (also not shown) from the gearbox (not shown) rotates the drums 35 and in turn the belts 37 for simultaneously rotating the bale 2 about a central horizontal axis of the bale while the bale 2 is being rotated about the central vertical axis 39 for wrapping of the bale. A pair of retaining rollers 42 rotatable on the brackets 43 extending from the bale support framework 22 locate the bale 2 on the drive belts 37 during wrapping.

The bale wrapping apparatus 1 described to here is substantially similar to well known bale wrapping apparatus, and will be well known to those skilled in the art, and accordingly, it is not intended to describe the chassis 4, feed mechanism 16 and bale support table 20 in further detail.

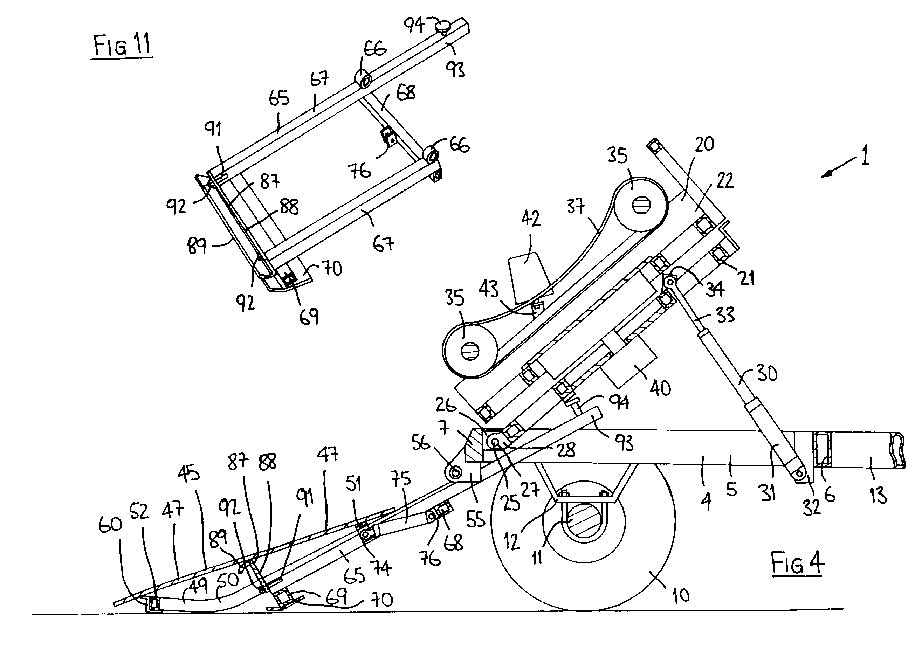

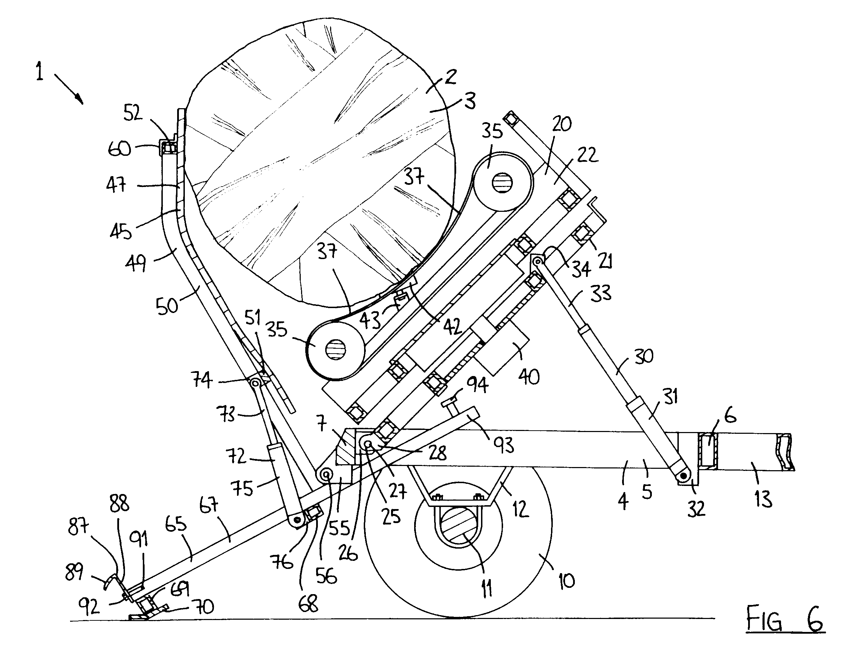

A bale support means for receiving a wrapped bale 2 from the bale support table 20 and for transferring and delivering the wrapped bale 2 to the ground 20 comprises a bale transfer member 45 which is pivotally connected to the chassis 4 about a first pivot axis 48 (see Fig. 8) and is pivotal between a raised receiving position illustrated in Figs. 2, 3 and 6 for receiving a wrapped bale 2 from the bale support table 20 to a delivery position illustrated in Figs. 4 and 7 adjacent the ground for delivering the wrapped bale onto the ground. The bale transfer member 45 comprises a bale support plate 47 secured to a carrier framework 49 comprising a pair of spaced apart elongated parallel carrier members 50 which are joined by cross members 51 and 52. Two pairs of mounting brackets 55 extending rearwardly and downwardly from the rear end member 7 of the chassis 4 carry a pair of aligned pivot pins 56 which define the first pivot axis 48. Pivot mounting brackets 58 mounted on the carrier framework 45 pivotally engage the pivot pins 56 for pivoting the bale transfer member 45 about the first pivot axis 48 between the receiving and delivery positions. The first pivot axis 48 is adjacent the rear end of the chassis 4 and is spaced apart from and extends parallel to the main pivot axis 25. The bale transfer member 45 extends transversely from the first pivot axis 48 in a general direction rearwardly and away from the chassis 4. The bale support plate 47 is of a resilient plastics type material and is secured to the carrier framework 49 by brackets 60. The resilient aspect of the bale support plate 47 is described in more detail below. The carrier members 50 are curved towards the end cross member 52 to facilitate the bale support plate 47 substantially taking up the shape of a wrapped bale.

A second ground engaging means for stabilising the bale wrapping apparatus 1 while the bale transfer member 45 is supporting a wrapped bale comprises a ground engaging framework 65 which is pivotally connected by a connecting means, namely, a pair of pivotal connecting brackets 66 secured to the ground engaging framework 65. The pivot connecting brackets 66 pivotally engage the pivot pins 56 for pivoting the ground engaging framework 65 about a second pivot axis, which in this embodiment of the invention co-incides with the first pivot axis 48. The ground engaging framework 65 extends transversely from the first pivot axis 48 and rearwardly and in a similar general direction away from the chassis 4 as the bale transfer member 45. The ground engaging framework 65 comprises a pair of spaced apart elongated side members 67 joined by a pair of cross members 68 and 69. A ground engaging member 70 of steel plate material for engaging the ground is secured to the cross member 69, and as can be seen is spaced apart from the pivot connecting bracket 66.

Coupling means comprising a coupling ram 72 couples the transfer member 45 to the ground engaging framework 65 so that the transfer member 45 is at least partly supported by the ground engaging framework 65 for stabilising the bale wrapping apparatus when the transfer apparatus 45 is supporting a bale 3. The coupling ram 72 cushions movement of the bale transfer member 45 from the receiving position to the delivery position. In this embodiment of the invention, the coupling ram 72 also acts as a drive means, namely, a drive ram for pivoting the bale transfer member 45 between the delivery position and the receiving position and vice versa. The coupling ram is a single acting hydraulic ram and comprising a piston rod 73 which is pivotally connected to the bale transfer member 45 by a pivot mounting bracket 74 which is carried on the cross member 51. A housing 75 of the coupling ram 72 is pivotally connected to the ground engaging framework 65 by a pivot mounting bracket 76 which is carried on the cross member 68. The pivot mounting bracket 76 is located intermediate the connecting brackets 66 and the ground engaging member 70, and is located towards the connecting brackets 66.

Interlocking means comprising a valving means, namely, an hydraulic valve 80 interconnects and interlocks the coupling ram 72 with the tipping ram 30 so that hydraulic fluid being delivered to and from the tipping ram 30 is simultaneously delivered to and from the ram 72, see Fig. 12. Hydraulic pipes 81 and 82 connect the valve 80 with the tipping ram 30 and the coupling ram 72, respectively. An hydraulic pipe 83 receives and delivers hydraulic fluid from and to a hydraulic power source (not shown). A variable restrictor 84 in the hydraulic pipe 83 enables the hydraulic fluid flow to and from the rams 30 and 72 to be controlled for controlling operation of the two rams 30 and 72. A control means, namely, a variable restrictor 85 is provided in the hydraulic line 82 to further permit the rate of operation of the coupling means 72 and in turn, the rate of movement of the bale transfer member 45 to be controlled. In particular, the variable restrictor 85 controls the return flow of hydraulic fluid from the coupling ram 72 so that the rate of pivoting of the bale transfer member 45 from the receiving position to the delivery position may be controlled to avoid the bale transfer member 45, and in turn the bale 2 engaging the ground with a relatively sudden impact. Accordingly, on hydraulic fluid being delivered to the tipping ram 30 and the coupling ram 72, the bale support table 20 and the bale transfer member 45 are pivoted upwardly into their respective tipped position and receiving position for discharging the wrapped bale from the bale support table 20 to the bale transfer member 45. On exhausting of the hydraulic fluid from the rams 30 and 72, the bale support table 20 and bale transfer member 45 pivot downwardly into their respective bale wrapping position and delivery position.

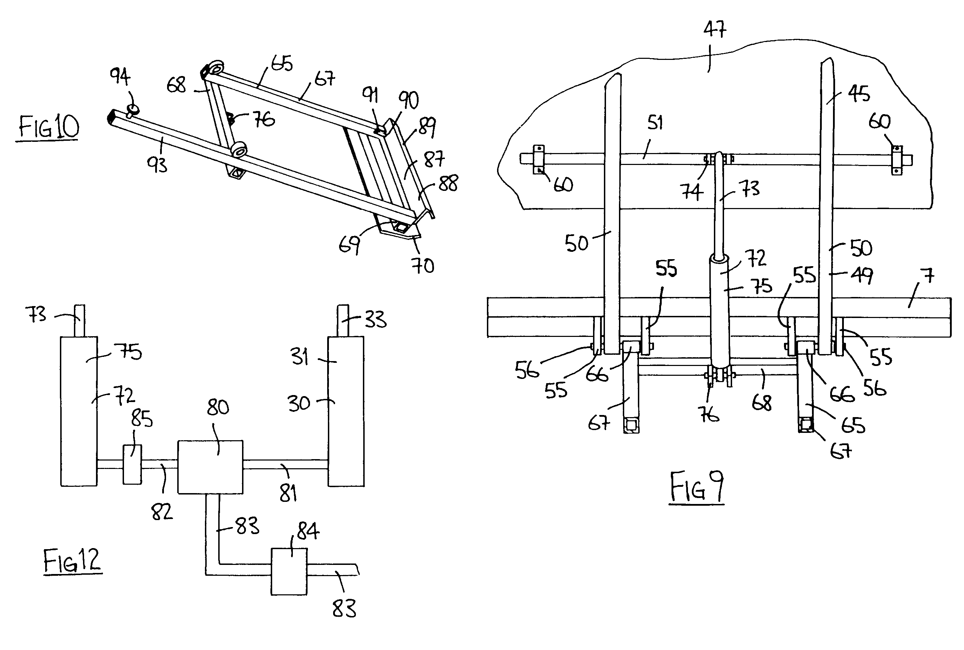

Urging means comprising an urging member 87 is releasably secured to the cross member 69 of the ground engaging framework 65 for co-operating with the bale support plate 47 for deforming the bale support plate 47 when the bale transfer member 45 is in the delivery position for delivering the wrapped bale 2 from the bale transfer member 45. The urging member comprises an elongated transverse member 88 which extends transversely of and is secured to the cross member 69 of the ground engaging framework 65. The transverse member 88 extends upwardly of the ground engaging framework 65 and carries an elongated radiused abutment member 89 which also extends transversely of the ground engaging framework 65 and abuts and deforms the bale support plate 47 when the bale transfer member 45 is in the delivery position. The deformation of the bale support plate 47 as can be seen in Fig. 7 urges the wrapped bale 2 from the bale support plate 47 onto the ground. The bale support plate 47 is of a relatively thick and strong plastic material with rubberlike resilient characteristics so that the deformation of the bale support plate 47 caused by the urging member 87 is not localised, but rather is over a relatively large area to ensure delivery of the wrapped bale 2 from the bale transfer member 45. This can most clearly be seen in Fig. 7. A pair of holes 90 in the transverse member 88 engage screws 91 secured to the side member 67 so that the urging member 87 may be mounted to the ground engaging framework 65 in two orientations, namely, an operable orientation which is illustrated in most of the Figs. for co-operating with the bale support plate 47 for urging the wrapped bale 2 from the bale transfer member 45 and an inoperable position illustrated in Fig. 11 in which the urging member 47 does not engage or co-operate with the bale support plate 47. Nuts 92 secure the urging member 87 to the ground engaging framework 65 in both the operable and inoperable positions.

The ground engaging framework 65 is pivotal about the pivot pins 56 from a ground engaging position illustrated in Figs. 2, 3, 4 and 6 with the ground engaging member 70 engaging the ground for stabilising the bale wrapping apparatus 1 to a raised position illustrated in Fig. 5 with the ground engaging member 70 spaced apart above the ground to facilitate trailing of the bale wrapping apparatus 1. A table engaging means, namely, an extension 93 of one of the side members 67 of the ground engaging framework 65 extends beyond the pivotal connecting member 66 beneath the bale support table 20 for co-operating with the subframework 21 as the bale support table 20 is pivoting into the wrapping position for pivoting the ground engaging framework 65 into the raised position. A pad 94 of resilient material, namely, plastics material, carried on the extension 93 engages the subframework 21 as the subframework 21 is approaching the wrapping position, so that the last few degrees of movement of the subframework 21 is sufficient to pivot the ground engaging framework 65 into the raised position.

Control valves (not shown) which may be operated manually by levers, or by solenoids, and where operated by solenoids may be operated automatically, controls the operation of the tipping ram 30 and the coupling ram 72 as well as the hydraulic motor 40. Other hydraulic operating components which have not been described but which are required for operation of the bale wrapping apparatus 1 will be well known to those skilled in the art are also controlled by suitable hydraulic valves. Connections (not shown) are provided from the hydraulic valves for connecting the hydraulic system of the bale wrapping apparatus 1 to a suitable hydraulic power source, such as, for example, the hydraulic power source of a tractor or the like.

In this embodiment of the invention, the chassis 4, the subframework 21, the bale support framework 22, the bale transfer member 45 and the ground engaging framework 65 are by and large respectively constructed from box section steel which is welded together.

In use, a bale 2 to be wrapped is delivered onto the bale support table 20. The bale wrapping apparatus 1 is operated in conventional fashion which will be well known to those skilled in the art until the bale 2 has been fully and satisfactorily wrapped. During wrapping, the bale 2 is rotated about the central vertical axis 39 by rotation of the bale support framework 22 and about the central horizontal axis of the bale 2 by the drive belts 37. This will be well known to those skilled in the art.

On being wrapped, hydraulic fluid from an hydraulic source (not shown) which may be the hydraulic source of a tractor to which the bale wrapping apparatus 1 is coupled is delivered to the tipping ram 30 and the coupling ram 72 for pivoting the bale support table 20 and the bale transfer member 45 simultaneously upwardly into their respective tipped and receiving positions. In these positions, the wrapped bale 2 is transferred from the bale support table 20 on the bale transfer member 45. Prior to the bale support table 20 pivoting from the wrapping position, the ground engaging framework 65 is retained in the raised position by the subframework 21. On the bale support table 20 pivoting a few degrees from the wrapping position, the subframework 21 disengages the pad 94 on the extension 93 of the ground engaging framework 65 and the ground engaging framework 65 pivots downwardly under its own weight into the ground engaging position. Hydraulic fluid is then exhausted from the tipping ram 30 and the coupling ram 72 for returning the bale support table 20 and the bale transfer member 45 to their respective wrapping and delivery positions. The weight of the bale support table 20 acting on the tipping ram 30 is sufficient to retract the tipping ram 30 to the wrapping position on the hydraulic fluid being exhausted from the tipping ram 30. The weight of the bale transfer member 45 in combination with the wrapped bale 2 acting on the coupling ram 72 is sufficient for pivoting the bale transfer member 45 from the receiving position to the delivery position once exhaust of the hydraulic fluid from the coupling ram 72 commences. The variable restrictor 85 is adjusted so that the bale transfer member 45 is cushioned, but also reaches its delivery position before the bale support table 20 reaches the wrapping position. Thus, on the bale transfer member 45 reaching the delivery position, the action of the urging member 87 on the bale support plate 47 urges the bale 2 from the bale support plate 47 onto the ground. Just after the bale 2 has been delivered from the bale support plate 47, the bale support table 20 approaches the wrapping position and engages the pad 94 on the extension 93 of the ground engaging framework 65 so that further pivotal movement into the wrapping position of the bale support table 20 pivots the ground engaging framework 65 into the raised position. The carrier framework 49 is engaged by the cross member 69 of the ground engaging framework 65, and thus, the ground engaging framework 65 rises the bale transfer member 45 spaced apart above the ground. In this position, the bale wrapping apparatus 1 is ready for trailing, should this be desired. Additionally, the bale wrapping apparatus 1 is ready to receive the next bale on the bale support table 20 to be wrapped. On the next bale having been wrapped, the tipping ram 30 and coupling ram 72 are again operated for pivoting the bale support table 20 and the bale transfer member 45 into the respective tipped and receiving positions for transferring the wrapped bale from the bale support table 20 onto the bale transfer member 45. The wrapped bale is lowered and delivered to the ground by the bale transfer member 45 as already described.

Should it be desired not to use the urging member 87 for urging the wrapped bale 2 from the bale transfer member 45, the urging member 87 may be removed altogether or secured to the ground engaging framework 45 in the inoperable orientation illustrated in Fig. 11.

The advantages of the invention are many, and most of the advantages have been discussed above. However, a particularly important advantage of the invention is that the bale wrapping apparatus 1 remains stable during discharge of a wrapped bale from the bale support table to the ground, and the bale is not damaged. This is achieved by the provision of the bale transfer member 45 and the fact that the bale transfer member 45 is coupled through the coupling ram 72 to the ground engaging framework 65 so that most of the weight of the wrapped bale is transferred to the ground through the ground engaging framework 65. This thus avoids any danger of a turning moment being induced in the chassis 4 which would topple or overbalance the bale wrapping apparatus 1. Furthermore, by virtue of the fact that the tipping ram 30 and the coupling ram 72 are interlocked, simultaneous operation of the bale support table 20 and the bale transfer member 45 is achieved.

While the bale support plate of the bale transfer member has been described as being of a resilient material, in certain cases, it is envisaged that the bale support plate may be of a rigid material, such as, for example, sheet metal, plate metal or the like. In which case, where it is desired to provide the urging member, it is envisaged that the urging member would act through an opening in the bale support plate and would act directly on the wrapped bale.

While a particular construction of bale support means, namely, the bale transfer member, has been described, other constructions of bale support means may be provided. It will also be appreciated that other constructions of ground engaging means besides a ground engaging framework may be provided. Indeed, it is envisaged in certain cases that the ground engaging framework may not be connected to the chassis, and in other cases, where the ground engaging framework is connected to the chassis, it may not be movably connected, in other words, it may be rigidly connected to the chassis. Alternatively, where the ground engaging framework is movably connected to the chassis, it may be connected to the chassis by other movable means besides pivotal movement. Needless to say, the bale support means may also be movably connected to the chassis by means other than a pivotal connection.

While the bale wrapping apparatus has been described for wrapping a round bale, the bale support apparatus may also be used for wrapping a square, rectangular, or any other shaped bales. Needless to say, the bale wrapping apparatus may be used for wrapping bales of material other than straw and hay, and indeed, bales of material other than forage material.

While it is preferable that the coupling means be provided by a cushioning means, typically an hydraulic ram, it is not essential that the coupling means be provided as a hydraulic ram. Other suitable coupling means may be used. Indeed, in certain cases, it is envisaged that the coupling means may be provided by a suitable resilient member, such as, for example, an hydraulic damper, a spring or the like. It will also be appreciated that where the ground engaging framework is movably mounted relative to the chassis, other means for moving the ground engaging framework between the ground engaging position and the raised position may be provided. It will be appreciated that many other co-operating arrangements between the ground engaging means and the bale support table could be provided. It will also of course be appreciated that other means besides means co-operating with the bale support table may be provided for moving the ground engaging framework from the ground engaging position to the raised position.

While it is preferable, it is not essential that the tipping ram and coupling ram be interlocked.

## Claims

1. A bale wrapping apparatus comprising a chassis (4), a first ground engaging means (10) for supporting the chassis (4) on the ground, a bale support table (20) for supporting the bale being wrapped, the bale support table (20) being mounted on the chassis (4) and being movable relative to the chassis (4) from a wrapping position for supporting the bale during wrapping to a raised tipped position for discharging a wrapped bale therefrom, a bale support means (45) mounted on the chassis (4) and movable relative to the chassis (4) between a receiving position spaced apart above the ground for receiving a wrapped bale from the bale support table (20) and a delivery position adjacent the ground for permitting delivery of the wrapped bale to the ground, and a drive means (72) for moving the bale support means (45) from the delivery position to the receiving position, CHARACTERISED IN THAT a second ground engaging means (65) is provided for engaging the ground at a location spaced apart from the first ground engaging means (10), and a coupling means (72) couples the bale support means (45) to the second ground engaging means (65) so that the bale support means (45) is at least partly supported by the second ground engaging means (65) for stabilising the bale wrapping apparatus (1) while the bale support means (45) is supporting a wrapped bale, the coupling means (72) permitting movement of the bale support means (45) relative to the second ground engaging means (65).

2. A bale wrapping apparatus as claimed in Claim 1 characterised in that a control means (85) is provided for controlling the rate of movement of the bale support means (45) as the bale support means (45) moves towards the delivery position.

3. A bale wrapping apparatus as claimed in Claim 1 or 2 characterised in that the coupling means (72) is a cushioning means (72) connected between the bale support means (45) and the second ground engaging means (65).

4. A bale wrapping apparatus as claimed in any preceding claim characterised in that the coupling means (72) comprises a coupling ram (72), the control means (85) being associated with the coupling ram (72) for controlling the rate of fluid flow associated with the coupling ram (72) for cushioning the stroke of the coupling ram (72) as the bale support means (45) is moving from the receiving position to the delivery position, the coupling means (72) acting as the drive means (72) for moving the bale support means (45) from the delivery position to the receiving position.

5. A bale wrapping apparatus as claimed in Claim 4 characterised in that the coupling ram (72) is a single acting hydraulic ram (72).

6. A bale wrapping apparatus as claimed in any preceding claim characterised in that a tipping means (30) for moving the bale support table (20) from the wrapping position to the tipped position is provided, and an interlocking means (80) is provided for interlocking the coupling means (72) with the tipping means (30) so that the coupling means (72) moves the bale support means (45) from the delivery position to the receiving position as the tipping means (30) is moving the bale support table (20) from the wrapping position to the tipped position, and the interlocking means (80) causes the coupling means (72) to permit the bale support means (45) to commence movement from the receiving position to the delivery position on the tipping means (30) permitting the bale support table (20) to commence movement from the tipped position to the wrapping position.

7. A bale wrapping apparatus as claimed in any preceding claim characterised in that the bale support means (45) is pivotally mounted to the chassis (4) about a first pivot axis (48) and is pivotal about the first pivot axis (48) between the receiving position and the delivery position.

8. A bale wrapping apparatus as claimed in Claim 7 characterised in that the first pivot axis (48) extends substantially parallel to a main pivot axis (25) about which the bale support table (20) is pivotal between the wrapping position and the tipped position, the bale support means (45) extending transversely from the first pivot axis (48) in a general direction away from the chassis (4), and the bale support means (45) and the bale support table (20) being pivotal towards each other as they are moving into the respective receiving and tipped positions.

9. A bale wrapping apparatus as claimed in any preceding claim characterised in that an urging means (87) for urging a wrapped bale from the bale support means (45) is provided.

10. A bale wrapping apparatus as claimed in any preceding claim characterised in that the second ground engaging means (65) is connected to the chassis (4) by a connecting means (56,66), the second ground engaging means (65) extending from the connecting means (56,66) in a general direction away from the chassis (4) in the same general direction as the bale support means (45).

11. A bale wrapping apparatus as claimed in Claim 10 characterised in that the connecting means (56,66) connects the second ground engaging means (65) to the chassis (4) so that the second ground engaging means (65) is movable relative to the chassis (4) from a ground engaging position with the second ground engaging means (65) engaging the ground to a raised position with the second ground engaging means (65) spaced apart from the ground for accommodating trailing of the bale wrapping apparatus (1), the second ground engaging means (65) being operably associated with the bale support table (20) so that as the bale support table (20) is moving into the wrapping position, the second ground engaging means (65) is moved from the ground engaging position to the raised position.

12. A bale wrapping apparatus as claimed in Claim 10 or 11 characterised in that the connecting means (56,66) pivotally connects the second ground engaging means (65) to the chassis (4) about a second pivot axis (48), so that the second ground engaging means (65) is pivotal about the second pivot axis (48) between the ground engaging position to the raised position, the second ground engaging means (65) extending transversely from the second pivot axis (48).

13. A bale wrapping apparatus as claimed in Claim 12 when dependent on Claim 7 characterised in that the first and second pivot axes (48) co-incide with each other.

14. A bale wrapping apparatus as claimed in any of Claims 10 to 13 characterised in that the second ground engaging means (65) comprises an elongated member (65) extending from the connecting means (56,66) to a ground engaging member (70) spaced apart from the connecting means (56,66).

15. A bale wrapping apparatus as claimed in Claim 14 characterised in that the coupling means (72) is connected to the elongated member (65) of the second ground engaging means (65) at a location intermediate the connecting means (56,66) and the ground engaging member (70).

## Patentansprüche

1. Ballenwickelvorrichtung mit einem Fahrgestell (4), einer ersten Bodenabstützung (10) zum Abstützen des Fahrgestells (4) auf dem Boden, einem Ballentragtisch (20) zum Tragen des Ballen, der gewickelt wird, wobei der Ballentragtisch (20) am Fahrgestell (4) angebracht und bezüglich des Fahrgestells (4) von einer Wickelstellung zum Tragen des Ballens während des Wickelns zu einer angehobenen gekippten Stellung bewegbar ist, um einen gewickelten Ballen davon abzuladen, einem Ballenhalter (45), der am Fahrgestell (4) angebracht und bezüglich des Fahrgestells (4) zwischen einer Aufnahmestellung mit Abstand über dem Boden zum Aufnehmen eines gewickelten Ballens vom Ballentragtisch (20) und einer dem Boden benachbarten Abgabestellung bewegbar ist, um eine Abgabe des gewickelten Ballens auf den Boden zu gestatten, und einem Antrieb (72) zum Bewegen des Ballenhalters (45) von der Abgabestellung zur Aufnahmestellung, DADURCH GEKENNZEICHNET, DASS eine zweite Bodenabstützung (65) vorgesehen ist, um den Boden an einer von der ersten Bodenabstützung (10) beabstandeten Stelle zu berühren, und eine Kupplung (72) den Ballenhalter (45) mit der zweiten Bodenabstützung (65) so kuppelt, daß der Ballenhalter (45) durch die zweite Bodenabstützung (65) zumindest teilweise abgestützt wird, um die Ballenwickelvorrichtung (1) zu stabilisieren, während der Ballenhalter (45) einen gewickelten Ballen hält, wobei die Kupplung (72) eine Bewegung des Ballenhalters (45) bezüglich der zweiten Bodenabstützung (65) gestattet.

2. Ballenwickelvorrichtung nach Anspruch 1, dadurch gekennzeichnet, daß eine Steuerung (85) vorgesehen ist zum Steuern der Bewegungsgeschwindigkeit des Ballenhalters (45), während sich der Ballenhalter (45) zur Abgabestellung hin bewegt.

3. Ballenwickelvorrichtung nach Anspruch 1 oder 2, dadurch gekennzeichnet, daß die Kupplung (72) ein Dämpfer (72) ist, der zwischen den Ballenhalter (45) und die zweite Bodenabstützung (65) gekoppelt ist.

4. Ballenwickelvorrichtung nach einem vorhergehenden Anspruch, dadurch gekennzeichnet, daß die Kupplung (72) einen Kupplungskolben (72) aufweist, wobei die Steuerung (85) mit dem Kupplungskolben (72) zum Steuern der Geschwindigkeit des Fluidstroms verbunden ist, der dem Kupplungskolben (72) zum Dämpfen des Hubs des Kupplungskolbens (72) zugeordnet ist, während sich der Ballenhalter (45) von der Aufnahmestellung zur Abgabestellung bewegt, wobei die Kupplung (72) als Antrieb (72) wirkt, um den Ballenhalter (45) von der Abgabestellung zur Aufnahmestellung zu bewegen.

5. Ballenwickelvorrichtung nach Anspruch 4, dadurch gekennzeichnet, daß der Kupplungskolben (72) ein einfachwirkender hydraulischer Kolben (72) ist.

6. Ballenwickelvorrichtung nach einem vorhergehenden Anspruch, dadurch gekennzeichnet, daß eine Kippvorrichtung (30) zum Bewegen des Ballentragtisches (20) von der Wickelstellung zur gekippten Stellung vorgesehen ist und eine Verriegelung (80) vorgesehen ist, um die Kupplung (72) mit der Kippvorrichtung (30) zu verriegeln, so daß die Kupplung (72) den Ballenhalter (45) von der Abgabestellung zur Aufnahmestellung bewegt, während die Kippvorrichtung (30) den Ballentragtisch (20) von der Wickelstellung zur gekippten Stellung bewegt, und die Verriegelung (80) veranlaßt, daß die Kupplung (72) dem Ballenhalter (45) gestattet, eine Bewegung von der Aufnahmestellung zur Abgabestellung an der Kippvorrichtung (30) zu beginnen, was dem Ballentragtisch (20) gestattet, eine Bewegung von der gekippten Stellung zur Wickelstellung zu beginnen.

7. Ballenwickelvorrichtung nach einem vorhergehenden Anspruch, dadurch gekennzeichnet, daß der Ballenhalter (45) am Fahrgestell (4) um eine erste Drehachse (48) drehbar angebracht ist und um die erste Drehachse (48) zwischen der Aufnahmestellung und der Abgabestellung drehbar ist.

8. Ballenwickelvorrichtung nach Anspruch 7, dadurch gekennzeichnet, daß sich die erste Drehachse (48) im wesentlichen parallel zu einer Hauptdrehachse (25) erstreckt, um die der Ballentragtisch (20) zwischen der Wickelstellung und der gekippten Stellung drehbar ist, wobei sich der Ballenhalter (45) quer zur ersten Drehachse (48) in einer allgemeinen Richtung vom Fahrgestell (4) weg erstreckt und der Ballenhalter (45) und der Ballentragtisch (20) aufeinander zu drehbar sind, während sie sich in die jeweiligen Aufnahmestellungen und gekippten Stellungen bewegen.

9. Ballenwickelvorrichtung nach einem vorhergehenden Anspruch, dadurch gekennzeichnet, daß eine Treiberanordnung (87) vorgesehen ist, um einen gewickelten Ballen von dem Ballenhalter (45) zu treiben.

10. Ballenwickelvorrichtung nach einem vorhergehenden Anspruch, dadurch gekennzeichnet, daß die zweite Bodenabstützung (65) mit dem Fahrgestell (4) durch ein Verbindungsmittel (56, 66) verbunden ist, wobei sich die zweite Bodenabstützung (65) vom Verbindungsmittel (56, 66) in einer allgemeinen Richtung vom Fahrgestell (4) weg in der gleichen allgemeinen Richtung wie der Ballenhalter (45) erstreckt.

11. Ballenwickelvorrichtung nach Anspruch 10, dadurch gekennzeichnet, daß das Verbindungsmittel (56, 66) die zweite Bodenabstützung (65) mit dem Fahrgestell (4) verbindet, so daß die zweite Bodenabstützung (65) bezüglich des Fahrgestells (4) von einer Bodenauflagestellung, in der die zweite Bodenabstützung (65) den Boden berührt, zu einer angehobenen Stellung bewegbar ist, in der die zweite Bodenabstützung (65) vom Boden beabstandet ist, um das Hinterteil der Ballenwickelvorrichtung (1) aufzunehmen, wobei die zweite Bodenabstützung (65) mit dem Ballentragtisch (20) funktionsmäßig so verbunden, daß die zweite Bodenabstützung (65) von der Bodenauflagestellung zur angehobenen Stellung bewegt wird, während sich der Ballentragtisch (20) in die Wickelstellung bewegt.

12. Ballenwickelvorrichtung nach Anspruch 10 oder 11, dadurch gekennzeichnet, daß das Verbindungsmittel (56, 66) die zweite Bodenabstützung (65) mit dem Fahrgestell (4) um eine zweite Drehachse (48) drehbar verbindet, so daß die zweite Bodenabstützung (65) um die zweite Drehachse (48) zwischen der Bodenauflagestellung und der angehobenen Stellung drehbar ist, wobei sich die zweite Bodenabstützung (65) quer zur zweiten Drehachse (48) erstreckt.

13. Ballenwickelvorrichtung nach Anspruch 12, in Verbindung mit Anspruch 7, dadurch gekennzeichnet, daß die erste und die zweite Drehachse (48) miteinander übereinstimmen.

14. Ballenwickelvorrichtung nach einem der Ansprüche 10 bis 13, dadurch gekennzeichnet, daß die zweite Bodenabstützung (65) ein langgestrecktes Glied (65) aufweist, das sich von dem Verbindungsmittel (56, 66) zu einem vom Verbindungsmittel (56, 66) beabstandeten Bodenabstützglied (70) erstreckt.

15. Ballenwickelvorrichtung nach Anspruch 14, dadurch gekennzeichnet, daß die Kupplung (72) mit dem langgestreckten Glied (65) der zweiten Bodenabstützung (65) an einer zwischen dem Verbindungsmittel (56, 66) und dem Bodenabstützglied (70) gelegenen Stelle verbunden ist.

## Revendications

1. Appareil d'empaquetage de balles comprenant un châssis (4), un premier moyen d'engagement au sol (10) destiné à supporter le châssis (4) au sol, une table de support de balle (20) destinée à supporter la balle en cours d'empaquetage, la table de support de balle (20) étant montée sur le châssis (4) et étant mobile par rapport au châssis (4), d'une position d'empaquetage pour supporter la balle en cours d'empaquetage à une position basculée relevée pour décharger une balle empaquetée de cette table de support, un moyen de support de balle (45) monté sur le châssis (4) et mobile par rapport au châssis (4), entre une position de réception espacée au-dessus du sol permettant de recevoir une balle empaquetée de la table de support de balle (20) et une position de déversement contiguë au sol permettant de déverser la balle emapquetée sur le sol, et un moyen d'entraînement (72) destiné à déplacer le moyen de support de balle (45) de la position de déversement à la position de réception, caractérisé en ce qu'un second moyen d'engagement au sol (65) est prévu pour un engagement au sol en une position espacée du premier moyen d'engagement au sol (10), et un moyen d'accouplement (72) accouple le moyen de support de balle (45) au second moyen d'engagement au sol (65), de sorte que le moyen de support de balle (45) est au moins partiellement supporté par le second moyen d'engagement au sol (65) afin de stabiliser l'appareil d'empaquetage de balles (1) tandis que le moyen de support de balle (45) supporte une balle empaquetée, le moyen d'accouplement (72) permettant le déplacement du moyen de support de balle (45) par rapport au second moyen d'engagement au sol (65).

2. Appareil d'empaquetage de balles selon la revendication 1, caractérisé en ce qu'un moyen de commande (85) est prévu pour commander la vitesse de déplacement du moyen de support de balle (45) lorsque le moyen de support de balle (45) se déplace en direction de la position de déversement.

3. Appareil d'empaquetage de balles selon la revendication 1 ou 2, caractérisé en ce que le moyen d'accouplement (72) est un moyen amortisseur (72) raccordé entre le moyen de support de balle (45) et le second moyen d'engagement au sol (65).

4. Appareil d'empaquetage de balles selon l'une quelconque des revendications précédentes, caractérisé en ce que le moyen d'accouplement (72) comprend un piston d'accouplement (72), le moyen de commande (85) étant associé au piston d'accouplement (72) afin de commander la vitesse de l'écoulement de fluide associé au piston d'accouplement (72) de manière à amortir la course du piston d'accouplement (72) lorsque le moyen de support de balle (45) se déplace de la position de réception à la position de déversement, le moyen d'accouplement (72) agissant comme moyen d'entraînement (72) destiné à déplacer le moyen de support de balle (45) de la position de déversement à la position de réception.

5. Appareil d'empaquetage de balles selon la revendication 4, caractérisé en ce que le piston d'accouplement (72) est un piston hydraulique à simple effet (72).

6. Appareil d'empaquetage de balles selon l'une quelconque des revendications précédentes, caractérisé en ce qu'un moyen de basculement (30) destiné à déplacer la table de support de balle (20) de la position d'empaquetage à la position basculée est prévu, et un moyen de verrouillage mutuel (80) est prévu pour verrouiller mutuellement le moyen d'accouplement (72) au moyen de basculement (30), de sorte que le moyen d'accouplement (72) déplace le moyen de support de balle (45) de la position de déversement à la position de réception lorsque le moyen de basculement (30) déplace la table de support de balle (20) de la position d'empaquetage à la position basculée, et que le moyen de verrouillage mutuel (80) amène le moyen d'accouplement (72) à permettre au moyen de support de balle (45) de commencer à se déplacer de la position de réception à la position de déversement sur le moyen de basculement (30), en permettant à la table de support de balle (20) de commencer à se déplacer de la position basculée à la position d' empaquetage.

7. Appareil d'empaquetage de balles selon l'une quelconque des revendications précédentes, caractérisé en ce que le moyen de support de balle (45) est monté en pivotement sur le châssis (4) autour d'un premier axe de pivotement (48) et pivote autour du premier axe de pivotement (48), entre la position de réception et la position de déversement.

8. Appareil d'empaquetage de balles selon la revendication 7, caractérisé en ce que le premier axe de pivotement (48) s'étend de façon sensiblement parallèle à un axe de pivotement principal (25) autour duquel la table de support de balle (20) pivote entre la position d'empaquetage et la position basculée, le moyen de support de balle (45) s'étendant transversalement à partir du premier axe de pivotement (48) selon une direction générale qui s'écarte du châssis (4), et le moyen de support de balle (45) et la table de support de balle (20) pivotant l'un vers l'autre lorsqu'ils se déplacent dans les positions de réception et basculée respectives.

9. Appareil d'empaquetage de balles selon l'une quelconque des revendications précédentes, caractérisé en ce qu'un moyen de poussée (87) destiné à pousser une balle empaquetée du moyen de support de balle (45) est prévu.

10. Appareil d'empaquetage de balles selon l'une quelconque des revendications précédentes, caractérisé en ce que le second moyen d'engagement au sol (65) est raccordé au châssis (4) grâce à un moyen de raccordement (56,66), le second moyen d'engagement au sol (65) s'étendant du moyen de raccordement (56,66) selon une direction générale qui s'écarte du châssis (4), selon la même direction générale que le moyen de support de balle (45).

11. Appareil d'empaquetage de balles selon la revendication 10, caractérisé en ce que le moyen de raccordement (56,66) raccorde le second moyen d'engagement au sol (65) au châssis (4), de sorte que le second moyen d'engagement au sol (65) peut se déplacer par rapport au châssis (4) d'une position d'engagement au sol, avec le second moyen d'engagement au sol (65) s engageant au sol, à une position relevée, avec le second moyen d'engagement au sol (65) espacé au-dessus du sol, afin de permettre le remorquage de l'appareil d'empaquetage de balles (1), le second moyen d'engagement au sol (65) étant associé en fonctionnement à la table de support de balle (20), de sorte que lorsque la table de support de balle (20) se déplace et aboutit à la position d'empaquetage, le second moyen d'engagement au sol (65) est déplacé de la position d'engagement au sol à la position relevée.

12. Appareil d'empaquetage de balles selon la revendication 10 ou 11, caractérisé en ce que le moyen de raccordement (56,66) raccorde en pivotement le second moyen d'engagement au sol (65) au châssis (4) autour d'un second axe de pivotement (48), de sorte que le second moyen d'engagement au sol (65) pivote autour du second axe de pivotement (48), entre la position d'engagement au sol et la position relevée, le second moyen d'engagement au sol (65) s'étendant transversalement à partir du second axe de pivotement (48).

13. Appareil d'empaquetage de balles selon la revendication 12 lorsque celle-ci dépend de la revendication 7, caractérisé en ce que les premier et second axes de pivotement (48) coïncident l'un avec l'autre.

14. Appareil d'empaquetage de balles selon l'une quelconque des revendications 10 à 13, caractérisé en ce que le second moyen d'engagement au sol (65) comprend un élément allongé (65) s'étendant du moyen de raccordement (56,66) à un élément d'engagement au sol (70) espacé du moyen de raccordement (56,66).

15. Appareil d'empaquetage de balles selon la revendication 14, caractérisé en ce que le moyen d'accouplement (72) est raccordé à l'élément allongé (65) du second moyen d'engagement au sol (65) en une position intermédiaire entre le moyen de raccordement (56,66) et l'élément d'engagement au sol (70).
